(19) Europäisches Patentamt

European Patent Office

Office européen des brevets

(11) Publication number: **0 509 681 A2**

# EUROPEAN PATENT APPLICATION

(21) Application number: **92302921.9**

(22) Date of filing: **02.04.92**

(51) Int. Cl.⁵: **H02P 8/00**

(30) Priority: **16.04.91 US 686080**

(43) Date of publication of application:
**21.10.92 Bulletin 92/43**

(84) Designated Contracting States:
**DE FR GB IT**

(71) Applicant: **Hewlett-Packard Company**
**3000 Hanover Street**
**Palo Alto, California 94304(US)**

(72) Inventor: **Burruss, James W.**
**14105 NE Airport Drive**
**Vancouver, WA 98684(US)**

(74) Representative: **Colgan, Stephen James et al**
**CARPMAELS & RANSFORD 43 Bloomsbury**
**Square**
**London WC1A 2RA(GB)**

(54) **Method and apparatus for controlling a stepper motor.**

(57) A control circuit 16 for a stepper motor 14 driving a printhead carriage 12. A motor shaft encoder 16 provides shaft position information to a motor drive circuit 28 which causes the motor to be commutated each time it completes a step, i.e., commutation occurs responsive to motor shaft position. Motor shaft position is also provided to a summing node 20 which compares motor shaft position with commanded position thereby generating an error signal. A pulse width modulated signal 62 proportionate to the error signal is applied to the stepper motor coils.

Fig. 1

## BACKGROUND OF THE INVENTION

### 1. Field of the Invention

The present invention relates to methods and apparatus for controlling a stepper motor and more particularly to such methods and apparatus which utilize shaft position feedback.

### 2. Description of the Related Art

Prior art stepper motor control circuits which utilize motor position feedback are known. Such motors are used, e.g., to drive a printhead carriage along a linear track in a printer. The shaft of such a motor is advanced by applying a sequencing pulse to the motor. Each such pulse advances the motor shalt by an equal and predetermined angle. A typical motor for driving a printhead carriage has ninety-six half-steps per revolution, each of which advances the motor by 3.75° for each pulse applied thereto. As is known in the art, each pulse applies current to a different field coil or coils thereby moving the rotor, and thus the motor shaft, to the next step.

A printhead carriage having a stepper motor drive as described above may be assigned discreet positions along the track at which it is possible to position the printhead. Thus, an integral number of printhead positions can be assigned to the printhead carriage. Position zero is at one end of the track with each of the other position numbers being equal to the number of pulses necessary to drive the motor thereto. A typical prior art stepper motor control circuit applies a fixed current to one or two selected motor coils. Each pulse applies the selected current to a different coil or coils thereby causing the rotor to advance by the predetermined angle as described above.

A conventional shaft positioning encoder is mounted on the motor shaft. It produces a predetermined number of pulses per angle of shaft rotation. A count of such pulses thus corresponds to printhead carriage position.

In such prior art printhead carriage control circuits, the current applied to the various motor coils remains substantially constant while the rate of motor pulsing varies motor speed. Known control circuits compare the actual printhead position, as reflected by the encoder pulses, with a command signal specifying a printhead carriage position. The difference between the two, which is an error signal, pulses the motor until the same arrives at the desired position.

Such circuits suffer from several disadvantages. First, because constant current is applied to the various motor coils under all conditions, the motor is relatively noisy. Although less torque is required for slowly driving the motor, which is necessary as the motor approaches the position corresponding to the input command signal, full current is applied to the motor coils even as it is slowly pulsed. Such conditions cause noisy motor operation and excessive motor heating.

Operation of such a stepper motor with constant current applied to the coils is also a less accurate form of carriage position control than is, e.g., a dc servo motor. DC servo motors, on the other hand, are much more expensive than stepper motors.

## SUMMARY OF THE INVENTION

The present invention comprises a method and apparatus for controlling a stepper motor having a shaft which rotates through a predetermined angle when a voltage is applied to one of the motor windings. The voltage is applied to a first motor winding. The angular position of the motor shaft is sensed and after the shaft rotates through the predetermined angle, the voltage is removed from the first winding and applied to a second motor winding. Apparatus is also provided for performing the method of the invention.

The present invention is advantageous in that it overcomes the above-enumerated disadvantages associated with prior art stepper motor drive circuits. More particularly, the present invention provides an advantage in that a relatively inexpensive stepper motor can be to perform like a much more expensive brushless dc motor.

These and other advantages of the present invention will become more fully apparent when the detailed description of a preferred embodiment of the present invention is read in view of the accompanying drawings.

## BRIEF DESCRIPTION OF THE DRAWINGS

Fig.1 is a schematic diagram of an apparatus for controlling a stepper motor constructed in accordance with the present invention.

Fig. 2 is a more detailed schematic diagram of the drive circuit and motor illustrated in the schematic of Fig.1.

Fig.3 is exemplary plots illustrating the operation of the embodiment of Fig.1.

The foregoing and other objects, features and advantages of the invention will become more readily apparent from the following detailed description of a preferred embodiment which proceeds with reference to the drawings.

DETAILED DESCRIPTION OF THE PREFERRED EMBODIMENT

Indicated generally at 10 is a schematic diagram of a circuit for controlling the position of a printhead carriage. The printhead carriage is schematically illustrated by a load 12, also referred to herein as printhead carriage 12, which is operatively connected to the output shaft of a conventional stepper motor 14. The output shaft of motor 14 rotates a predetermined number of times as it moves the carriage from one end of the track to the other. The notation $\Theta_o$ is used herein to illustrate the actual or output position of the printhead carriage and thus the motor shaft. A conventional shaft position encoder 16 is mounted in part on the motor shaft and generates shaft position information by producing two quadrature channels of pulses as the shaft rotates. Thus, for an encoder disk mounted on the motor shaft having 384 lines per shaft revolution, 4 x 384 = 1536 counts per revolution are generated. As used herein $K_e = 4 \times N/2\Pi$ counts per radian where N equals the number of lines per revolution on the encoder disk mounted on the shaft of motor 14.

A position register 18 generates an increasing or decreasing, depending upon the direction of motor shaft rotation, count representative of printhead carriage position. The count in register 18 is provided to a summing node 20.

The other input to summing node 20 is provided by a profile generator 22 which produces digital printhead input position commands, denominated $\Theta_i$, indicative of the desired position for the printhead carriage. Profile generators, like profile generator 22, for producing digital signals indicative of desired stepper motor positions are known in the art and are typically implemented in software. A person having ordinary skill in the art in which the present invention relates can implement profile generator 22. The profile generator includes a sync input 23 for receiving a clock signal which synchronizes operation of the profile generator with other functions of circuit 10 in a known manner.

A digital drive signal representing the difference between the inputs to summing node 20 is thus generated at the summing node and applied to the input of a controller 24. Controller 24 processes the drive signal applied thereto with a control algorithm D(z). The control algorithm is known in the art and consists of a pole, zero and gain in the Z domain as follows:

$$D(z) = K(Z-A)/(Z-B)$$

where 0<A<1 and -1<B<0. The constant K is dependent upon total system dynamics and maybe determined by a person having ordinary skill in the art to which the present invention relates. Controller 24 also includes a sync input 25 which synchronizes controller operation in the same fashion that operation of profile generator 22 is synchronized and responsive to the same clock signal.

The output of controller 24 is a duty-cycle command signal which is provided to a pulse-width modulator 26. It should be noted that in the present invention, profile generator 22, summing node 20 and controller 24 are all implemented in software and controlled by a microprocessor. A person having ordinary skill in the art to which the present invention relates can generate software code for so implementing the profile generator summing node and controller.

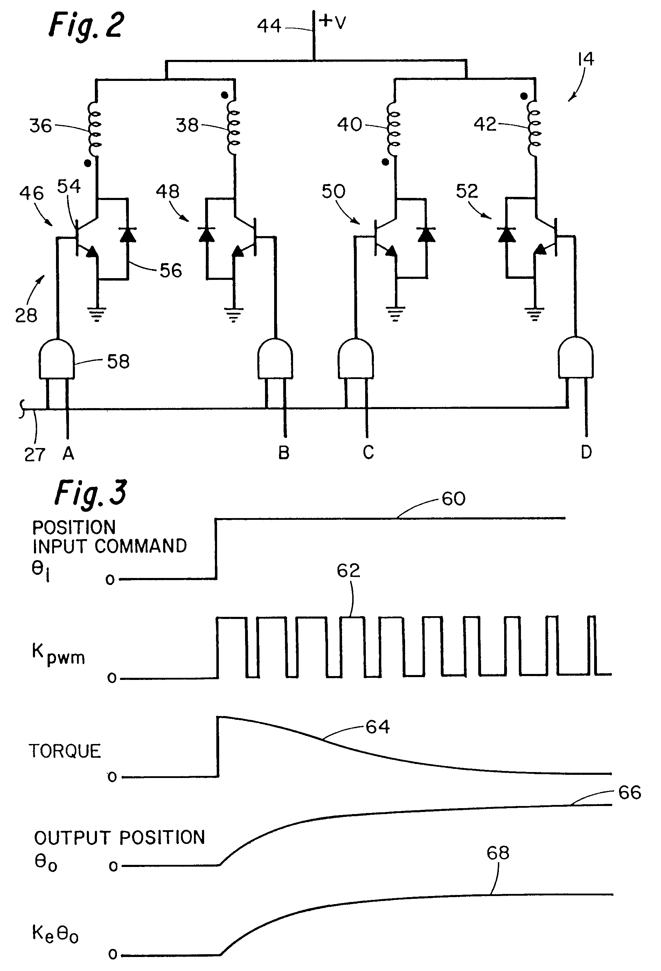

The output of pulse-width modulator 26 is applied (via conductor 27) to a drive circuit 28, the structure of which, along with motor 14, is described more fully with reference to Fig.3 hereinafter.

A conventional sequencer 30 includes an input terminal 32 and four output terminals, A, B, C, D. Each time a pulse is applied to input terminal 32, a different combination of digital signals appears on output terminals A, B, C, D. Eight different combinations are possible and each time terminal 32 is pulsed, the next combination in sequence is applied to output terminals A, B, C, D. The following chart illustrates the eight possible combinations, with "1" being a high signal level and "0" being a low signal level, and the sequence in which the combinations are presented on the output terminals:

3

| A | B | C | D |
|---|---|---|---|
| 1 | 0 | 0 | 1 |
| 0 | 0 | 0 | 1 |
| 0 | 1 | 0 | 1 |
| 0 | 1 | 0 | 0 |
| 0 | 1 | 1 | 0 |
| 0 | 0 | 1 | 0 |
| 1 | 0 | 1 | 0 |
| 1 | 0 | 0 | 0 |

As sequencer 30 is pulsed, the signals illustrated in the above chart are sequentially applied to output terminals A-D with the first row of signals being again presented responsive to the next input pulse after the signals in the last row are presented.

A conventional divide-by-16 circuit 34 provides a pulse on the output thereof, which is connected to input terminal 32, for each 16 pulses applied to the input thereof, which is connected to shaft position encoder 16. Attention is now directed to Fig. 2 for a more detailed description of drive circuit 28 and motor 14.

Motor 14 is commercially available and is constructed to have 96 half steps per revolution and, therefore, 3.75° of shaft rotation per half-step. The motor includes four field windings 36, 38, 40, 42 each of which has one end attached to a conductor 44 which in turn is connected to a dc voltage source (not shown). The other ends of windings 36, 38, 40, 42 are each connected to an associated gate circuit indicated generally at 46, 48, 50, 52, respectively.

Gate circuit 46 includes a transistor 54, a diode 56 and an AND gate 58 connected as shown. AND gate 58 operates in the usual fashion in that when both inputs thereto are at a high voltage level, the output thereof is also at a high level. With the output of AND gate 58 at a high level, transistor 54 is turned on thus connecting an end of winding 36 to ground and thereby applying voltage across the winding.

When transistor 54 is turned off, the end of winding 36 is disconnected from ground and thus no voltage is dropped there across. Each of the other gate circuits 48, 50, 52 are substantially identical to gate circuit 46 and operate in the same fashion.

In operation, an input signal is provided by profile generator 22 to summing node 20. As previously mentioned, summing node 20, profile generator 22 and controller 24 are implemented by a programmed microprocessor. Programming techniques for causing a microprocessor to respond in the manner described herein are known in the art. The position input command generated by profile generator 22 is illustrated as plot 60 in Fig. 3. Although the signals applied to and generated by summing node 20 are digital, some of the plots, like plot 60, in Fig. 3 are shown in analog form to facilitate comparison with other analog plots in Fig. 3.

As previously described, the digital signal from position register 18 is combined with the position input command signal $\Theta_i$ and the combined signal is applied to the input of controller 24 which operates on the combined position signal in a known manner to insure stable system operation by, e.g., minimizing overshoot, ringing, etc.

The signal from controller 24 is applied to the input of pulse width modulator 26 which produces a pulse width modulated signal having a duty cycle that varies as a function of the magnitude of the input signal thereto, i.e., the higher the input signal, the greater the duty cycle.

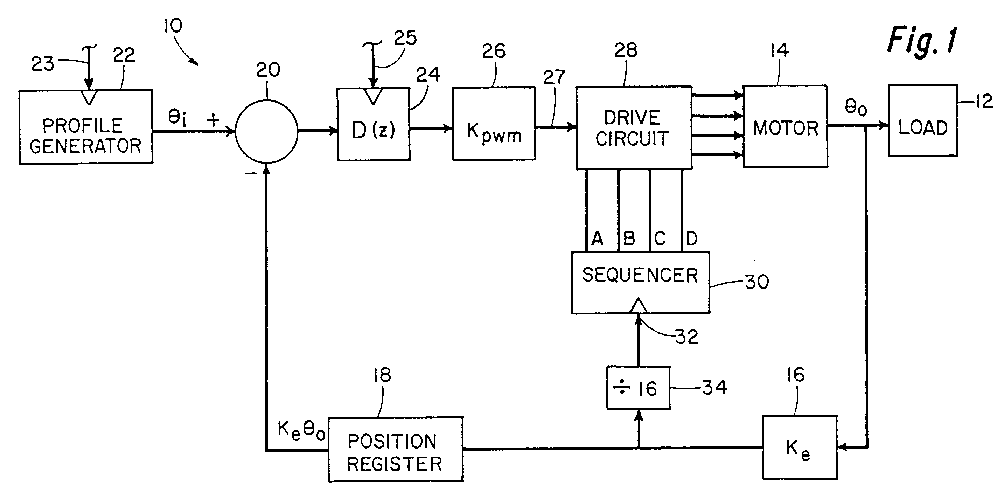

Considering now Figs. 1 and 2, it can be seen that with pulse width modulated signal 62 applied to conductor 27, dc motor voltage at conductor 44 is applied to coils 36-42 when the AND gate associated with each coil has the input thereof from sequencer 30 at a high level. For example, when input A of gate 58 is at a high level, gate circuit 46 switches responsive to the pulse width modulated signal 62 on conductor 27. Voltage having the frequency of signal 62 is thus supplied across field winding 36. In the present embodiment of the invention, signal 62 has a frequency of approximately 20 kilohertz. When signal 62 is so applied, torque generated by motor 14 varies as shown in plot 64, i.e., the torque is proportional to the duty cycle of the voltage applied across the motor windings. Similarly, as the torque produced by the motor drops, the rate of movement of printhead carriage 12 slows as the output position, $\Theta_o$ shown in plot 66, approaches the commanded output position shown in plot 60.

As the output position varies as shown in plot 66, position register 18 produces a digital count, shown in analog form in plot 68, indicative of the position of the printhead carriage.

For every 16 pulses produced by shaft position encoder 16, circuit 34 produces a single output pulse which is applied to the input of sequencer 30. For each input pulse applied thereto, the sequencer advances

4

EP 0 509 681 A2

to the next set of output conditions illustrated in Table 1. It can thus be seen that the motor is commutated each time the shaft thereof rotates through a predetermined angle. Because the motor used herein has 96 half-steps per revolution, each pulse applied to the motor, which advances the motor a half-step, causes the shaft to rotate 3.75°. It can be seen that each time the motor so advances, it is commutated as result of the action of sequencer 30.

Such action causes the motor to perform very much like a brushless dc motor, i.e., much more smoothly and quietly. In the present invention, the motor draws only the current it needs, i.e., as it approaches the commanded position, motor rotation slows and the current applied to the motor coils drops. The torque produced by the motor thus also drops. In conventional stepper motor operation, the motor advances rapidly to the next half-step and stays positioned there until the next commutation pulse. Such operation is noisy and rough. In the present invention, commutation occurs only when the shaft has just completed revolution through the preceding half-step. Operation is thus smooth and relatively quiet.

Having illustrated and described the principles of my invention in a preferred embodiment thereof, it should be readily apparent to those skilled in the art that the invention can be modified in arrangement and detail without departing from such principles. I claim all modifications coming within the spirit and scope of the accompanying claims.

**Claims**

1.  A method for controlling a stepper motor 14 having a shaft which rotates through a predetermined angle when a voltage is applied to one of the motor windings, the method comprising the steps of:
    applying a voltage to a first motor winding 36;
    sensing the angular position of the motor shaft; and
    removing the voltage from the first winding and applying a voltage to a second motor winding 38 when the shaft rotates through the predetermined angle.

2.  The method of claim 1 wherein said method further includes the step of sequentially applying a voltage to each of the motor windings 36, 38, 40, 42 in a predetermined order.

3.  The method of claim 2 wherein said method further includes the step of generating a periodic voltage and where in the step of sequentially applying a voltage to each of the motor windings in a predetermined order comprises the step of sequentially applying the periodic voltage to each of the motor windings.

4.  The method of claim 3 wherein said method further comprises the step of modulating the pulse width of the periodic voltage as a function of motor shaft position.

5.  The method according to any of the preceding claims wherein said method further includes the step of generating a count proportional to motor shaft position and wherein the voltage applied to each of the motor windings is shifted from one winding to the next responsive to the count.

6.  An apparatus for positioning a printhead carriage 12 between a pair of opposed frame members on a printer, said apparatus comprising:
    a stepper motor 14 having a shaft operatively connected to the printhead carriage for driving the carriage along a track disposed between said frame members; and
    means for commutating said motor responsive to track position.

7.  The apparatus of claim 6 wherein said means for commutating said motor responsive to track position comprises means for commutating said motor each time said carriage moves a preselected distance along said track.

8.  The apparatus according to any of the preceding claims wherein said means for commutating said motor responsive to track position comprises a shaft position encoder 16 and a sequencer 30 operatively connected to said stepper motor 14, said encoder 16 being operatively connected to said sequencer 30 and causing said sequencer 30 to commutate said motor each time said encoder 16 indicates a preselected amount of shaft rotation has occurred.

9.  The apparatus according to any of the preceding claims wherein said stepper motor 14 includes a

5

plurality of field windings 36, 38, 40, 42 and wherein said apparatus further includes means for applying a periodic voltage to selected ones of said field windings.

10. The apparatus of claim 9 wherein said apparatus further includes means for modulating the pulse width of said periodic voltage responsive to carriage position.

Fig.1

EP 0 509 681 A2

*Fig. 2*

44 — +V

14

36    38    40    42

46  54    48    50    52

56

28

58

27  A        B    C        D

*Fig. 3*

60

POSITION
INPUT COMMAND
$\theta_I$
0

62

$K_{pwm}$
0

64

TORQUE
0

66

OUTPUT POSITION
$\theta_o$
0

68

$K_e\theta_o$
0